# EUROPÄISCHE PATENTSCHRIFT

(11) **EP 0 643 615 B1**
(45) Veröffentlichungstag und Bekanntmachung des Hinweises auf die Patenterteilung: **13.03.1996**
(21) Anmeldenummer: 93912821.1
(22) Anmeldetag: 28.05.1993
(51) Int. Cl.: B01D 65/08, B01D 65/02, B01D 61/02

(54) **VERFAHREN SOWIE AUFBEREITUNGSVORRICHTUNG ZUR REINWASSERHERSTELLUNG**
CONDITIONING PROCESS AND DEVICE FOR PRODUCING PURE WATER
PROCEDE ET DISPOSITIF DE PREPARATION EN VUE DE LA PRODUCTION D'EAU PURE

(30) Priorität: 02.06.1992 DE 4218115
(43) Veröffentlichungstag der Anmeldung: 22.03.1995
(73) Patentinhaber: Lauer, Günter, D-79539 Lörrach (DE)
(72) Erfinder: Lauer, Günter, D-79539 Lörrach (DE)
(74) Vertreter: Schmitt, Hans, Dipl.-Ing.
(86) Internationale Anmeldenummer: EP9301348
(87) Internationale Veröffentlichungsnummer: WO9324212

(56) Entgegenhaltungen:
- EP-A- 0 355 632
- EP-A- 0 470 015
- DE-A- 3 411 471
- DE-A- 3 927 291
- DE-A- 4 021 123
- FR-A- 2 586 202
- US-A- 3 502 211
- US-A- 4 936 997

## Beschreibung

Die Erfindung betrifft ein Verfahren zur Reinwasserherstellung gemäß dem Oberbegriff von Anspruch 1. Die Erfindung befaßt sich insbesondere zur Durchführung des eingangs erwähnten Verfahrens auch mit einer Aufbereitungsvorrichtung zur Reinwasserherstellung gemäß dem Oberbegriff von Anspruch 6.

Mit der Ultrafiltration, Mikrofiltration und insbesondere der Umkehrosmosetechnik sind bereits verschiedene Verfahren zur Reinwasserherstellung bekannt, bei denen aus einem mit Stoffgemischen belasteten Rohwasser mittels einer semipermeablen Membran ein demgegenüber geringer belastetes Reinwasser hergestellt wird.

So kennt man bereits eine Aufbereitungsvorrichtung, die in einem Vorrichtungsgehäuse ein sogenanntes Wickelmodul aufweist. Dieses Wickelmodul besteht aus mehreren doppelwandigen Flachmembranen, die spiralförmig um ein Filtrat-Sammelrohr aufgewickelt sind. Während das Filtrat-Sammelrohr sowie die von den beiden Wänden jeder Membran eingeschlossenen Membran-Innenräume Teil des Reinwasserbereichs der vorbekannten Aufbereitungsvorrichtung sind, begrenzen die übereinanderliegenden und geringfügig auf Anstand gehaltenen Außenwände der Flachmembranen, deren Rohwasserbereich. Das Rohwasser strömt an dem einen stirnseitigen Ende in den Rohwasserbereich des Wickelmoduls ein, um diesen Rohwasserbereich an dem gegenüberliegenden anderen Modulende als Konzentrat wieder zu verlassen. Nur eine Teilmenge des dabei an den Flachmembranen vorbeiströmenden Rohwassers passiert diese unter der treibenden Kraft einer Druckdifferenz als Reinwasser.

Da das Wickelmodul der vorbekannten Aufbereitungsvorrichtung vom Rohwasser nur in einer Strömungsrichtung durchströmt wird, weist das Wickelmodul nur an seinem einen, der Strömungsrichtung zugewandten Stirnende eine Ringdichtung auf, deren Dichtlippe entgegen der Strömungsrichtung zur Innenwand des benachbarten Vorrichtungsgehäuses weist und den zwischen der Innenwand des Vorrichtungsgehäuses und der Außenseite des rohrförmig gewickelten Wickelmoduls gebildeten Ringspalt abdichtet.

Wie auch andere Membranmodule ist ein solches Wickelmodul gegen Verunreinigungen und Ausfällungen empfindlich. Solchen Modulen wird daher regelmäßig ein siebartiges Vorfilter in Strömungsrichtung vorgeschaltet, welches einer Verschmutzung der Membranen durch größere Partikel entgegenwirken soll und bei starker Verschmutzung des Rohwassers häufig gewechselt werden muß. Dennoch verschmutzen die Membranen während der Betriebszeit insbesondere in dem der Rohwasser-Strömungsrichtung Zugewandten Endbereich des Wickelmoduls.

Aus der EP-A-0.355.632 ist bereits ein Verfahren zum Aufbereiten der Bearbeitungsflüssigkeit einer Elektro-Erosionsmaschine im Wege der Mikrofiltration mit Hilfe eines Membranfilters bekannt, dessen Zusetzen dadurch verhindert wird, daß die Strömungsrichtung des Konzentratstromes periodisch umgekehrt wird. Bei einer Umkehr der Konzentratströmungsrichtung wird der aus den im Rohwasser enthaltenen Feststoffteilen bestehende Schmutzkuchen, der sich im Rohwasserbereich auf der Eingangsseite an der Membran aufgebaut hat, von dieser abgeschwemmt.

Aus der EP-A-0.470.015 ist bereits ein Verfahren sowie eine Aufbereitungsvorrichtung der eingangs erwähnten Art bekannt, bei denen das in einem Wasserkreislauf zirkulierende Rohwasser im Querstromverfahren über ein Mikrofilter geführt wird, wobei eine Teilmenge dieses Rohwassers das Mikrofilter als Filtrat durchströmt. Dem Mikrofilter ist sowohl auf der Rohwasserseite als auch auf der Reinwasserseite jeweils ein verstellbarer Schieber nachgeschaltet, die während den Filterphasen der vorbekannten Vorrichtung geöffnet sind. In einer zwischen zwei Filterphasen zwischengeschalteten Reinigungsphase wird der auf der Reinwasserseite angeordnete Schieber geschlossen, während der auf der Rohwasserseite des Mikrofilters angeordnete Schieber schlagartig geöffnet wird. Durch die plötzliche Erhöhung des dynamischen Wasserdrucks läßt sich bei der vorbekannten Aufbereitungsvorrichtung eine Rückspülung des Filtrats von der Reinwasser- zur Rohwasserseite und somit eine Reinigung des Mikrofilters erreichen.

Sowohl in der EP-A-0.355.632 als auch in der EP-A-0.470.015 werden die Feststoffteilchen über ein Mikrofilter ausgefiltert. Im Wege der Mikrofiltration ist zwar eine vergleichsweise hohe, aber dennoch nur begrenzte Reinigung des zugeführten Roh- oder Speisewassers möglich, wobei die Qualität des gewonnenen Reinwassers von der Porengröße der verwendeten Membran abhängt.

Eine bessere Reinwasserqualität läßt sich zwar mit Hilfe der insbesondere in der Umkehrosmosetechnik verwendeten Wickelmodule erzielen. Bei diesen Wickelmodulen ist jedoch eine Rückspülung oder eine Fließrichtungsumkehr nicht vorgesehen, wie beispielsweise an der oben erwähnten einseitigen Anordnung der verwendeten Ringdichtung zu erkennen ist. Auch eine Rückspülung, bei der üblicherweise das Reinwasser auf der Reinwasserseite mittels Druckluft oder mittels einer Förderpumpe derart unter Druck gesetzt wird, bis das Permeat auch von der Konzentratseite der Membranwand die anhaftenden Schmutzpartikel ablöst, ist bei den empfindlichen Wickelmodulen nicht möglich, weil der zwischen den beiden Innenseiten einer gefalteten und spiralförmig gewickelten Membranwand verbleibende Reinwasserbereich dieser Wickelmodule nur sehr klein bemessen ist und daher eine Druckbeaufschlagung mittels Druckluft nicht standhalten würde.

Es besteht daher die Aufgabe, ein Verfahren zur Reinwasserherstellung zu schaffen, bei dem das Roh- oder Speisewasser mit einer hohen Reinwasserqualität aufbereitet werden kann und das dennoch längere Betriebszeiten der dabei verwendeten semipermeablen Membrane und größere Wartungsintervalle erlaubt. Gleichzeitig besteht die Aufgabe, eine Aufbereitungsvorrichtung insbesondere zur Durchführung dieses Verfahrens zu schaffen.

Die erfindungsgemäße Lösung besteht bei dem Verfahren der eingangs erwähnten Art insbesondere darin, daß das Roh- oder Speisewasser einer als Wickelmodul ausgebildeten semipermeablen Membran zugeführt wird, daß der Rohwasserabfluß sowie der Reinwasserabfluß an der Membran in Zeitintervallen kurzfristig reduziert oder unterbrochen werden und daß vor einer Öffnung oder Erhöhung des Reinwasserabflusses eine Öffnung oder Erhöhung des Rohwasserabflusses an der Membran in einer im Vergleich zu der Strömungsrichtung des vor der Reduzierung oder Unterbrechung an der Membran vorbeiströmenden Rohwassers umgekehrten Fließrichtung erfolgt.

Bei dem erfindungsgemäßen Verfahren ist vorgesehen, daß der Rohwasserabfluß sowie der Reinwasserabfluß an der Membran in Zeitintervallen kurzfristig reduziert oder unterbrochen werden und daß vor einer Öffnung oder Erhöhung des Reinwasserabflusses eine Öffnung oder Erhöhung des Rohwasserabflusses an der Membran vorzugsweise in einer im Vergleich zu der Strömungsrichtung des vor der Reduzierung oder Unterbrechung an der Membran vorbeiströmenden Rohwassers umgekehrten Fließrichtung erfolgt. Stoppt man beispielsweise in Zeitintervallen kurzfristig den Rohwasser- sowie den Reinwasserabfluß an der Membran, so baut sich auf beiden Seiten der Membran zunächst derselbe statische Druck auf. Wird nun zunächst der Rohwasserabfluß geöffnet, so steht dem statischen Druck auf der Reinwasserseite der Membran gemäß der Bernoullischen Gleichung ein demgegenüber geringerer statischer Wasserdruck (durch Erhöhung des dynamischen Wasserdrucks) auf der Rohwasserseite der Membran gegenüber. Diese vorübergehende statische Druckdifferenz, die im Vergleich zu der Druckdifferenz während der Phase der Reinwasserherstellung entgegengesetzte statische Druckverhältnisse schafft, bewirkt einen schwallartigen Rückstrom des Reinwassers durch die Membran auf die Rohwasserseite, welcher auf der Rohwasserseite angelagerte Schmutzpartikel herausspült. Mit der anschließenden Öffnung auch des Reinwasserabflusses werden diese Druckverhältnisse wieder abgebaut und ein höherer Relativdruck auf der Rohwasserseite geschaffen, wie er zur Reinwasserherstellung beispielsweise bei der Umkehrosmose erforderlich ist. Durch die Fließrichtungsumkehr bildet gleichzeitig der vor der Fließrichtungsumkehr in Strömungsrichtung hintere Endbereich der Membran den nun vorderen Endbereich, in dem sich Schmutzpartikel stärker anlagern. Durch eine Umkehr der Fließrichtung des an der Membran oder den Membranen vorbeiströmenden Wassers werden beide Endbereiche des verwendeten Moduls benützt. Dabei werden die Schmutzpartikel herausgespült, die sich vor der Fließrichtungsumkehr vor allem in dem der Rohwasser-Strömung zugewandten Endbereich angelagert haben, während der bis dahin mit Schmutzpartikeln geringer belastete gegenüberliegende Endbereich des Moduls bis zur nächsten Fließrichtungsumkehr den in Strömungsrichtung vorderen Bereich bildet. Durch einen ständigen Wechsel der Druckverhältnisse auf beiden Seiten der Membrane sowie der Fließrichtungen des Rohwassers wird die Aufbereitungsvorrichtung kontinuierlich von Schmutzpartikeln gereinigt, was lange Betriebs- und Membranstandzeiten begünstigt. Da das Roh- oder Speisewasser bei dem erfindungsgemäßen Verfahren einer als Wickelmodul ausgebildeten Membran zugeführt wird, läßt sich eine hohe Reinwasserqualität erzielen, wobei gleichzeitig lange Betriebs- und Standzeiten der semipermeablen Membran möglich sind.

Vorteilhaft ist es, wenn die für eine Fließrichtungsumkehr und/oder für eine Anderung des Wasserdrucks an der Membran vorgesehenen Zeitintervalle und/oder die Höhe der Wasserdruckänderung an der Membran in Abhängigkeit vom Verschmutzungsgrad des Roh- oder Speisewassers gewählt werden. Durch eine Änderung der für eine Fließrichtungsumkehr sowie eine Änderung des Wasserdrucks im Reinwasser- und/oder Rohrwasserbereich vorgesehenen Zeitintervalle hinsichtlich ihrer Dauer und Häufigkeit kann das erfindungsgemäße Verfahren zur Reinwasserherstellung an den Verschmutzungsgrad des verwendeten Rohwassers angepaßt werden. Zusätzlich oder stattdessen läßt sich eine solche Anpassung aber auch durch eine Erhöhung oder Absenkung des auf der Reinwasserseite im Vergleich zur Rohwasserseite herrschenden statischen Relativdrucks bewirken, wenn während der Spül- oder Reinigungsphase der Aufbereitungsvorrichtung auf dieser Rohwasserseite ein demgegenüber geringerer statischer Relativdruck besteht und das Reinwasser durch die Membran von der Reinwasserseite zur Rohwasserseite übertritt.

Möglich ist es, der Aufbereitungsvorrichtung auch nach jeder Fließrichtungsumkehr stets Rohwasser oder dergleichen Speisewasser aus derselben Rohwasserquelle zuzuführen, wobei unter Speisewasser hier jedes zur Reinwasserherstellung in die Aufbereitungsvorrichtung eingespeiste Wasser zu verstehen ist. Ist jedoch durch die Aufkonzentrierung des Rohwassers sowie dessen hohen Salzgehalt ein derart unerwünscht hoher osmotischer Gegendruck zu befürchten, der einen Druckaufbau im Reinwasserbereich erschwert oder verhindert, so kann es eventuell vorteilhaft sein, wenn der Aufbereitungsvorrichtung zum zeitweisen Durchströmen in einer umgekehrten Fließrichtung, insbesondere während einer kurzfristigen Absenkung des statischen Wasserdrucks auf der Rohwasserseite (Spülphase der Aufbereitungsvorrichtung) im Vergleich zu dem auf der Reinwasserseite der Aufbereitungsvorrichtung bestehenden Wasserdruck, vorübergehend Reinwasser oder ein geringer salzhaltiges Wasser als Speisewasser zugeführt wird. Auf diese Weise strömt bei einer der beiden Fließrichtungen auf der Rohwasserseite vorübergehend nur Reinwasser oder ein geringer salzhaltiges Wasser an der Membran vorbei. Der Membran wird also in der einen Fließrichtung, insbesondere während der Phase der Reinwasserherstellung, das Rohwasser aus der betreffenden Speisewasserquelle zugeführt, um anschließend nach einer Fließrichtungsumkehr - während der Spülphase, bei der der auf der Rohwasserseite bestehende statische Wasserdruck im Vergleich zu dem auf der Reinwasserseite bestehenden statischen Wasserdruck kurzfristig gesenkt wird - einen Teil des bis dahin erzeugten Reinwassers oder ein geringer salzhaltiges Wasser in der anderen umgekehrten Fließrichtung an der Membran vorbeizuführen.

Insbesondere bei einem Verzicht auf siebartige und der Aufbereitungsvorrichtung in Strömungsrichtung vorgeschaltete Vorfilter kann es zweckmäßig sein, wenn dem Roh- oder Speisewasser in Fließrichtung vor der Membran chemische Anschwemmhilfen, Adsorbtionsmittel und/oder Absorptionsmittel (beispielsweise Aktivkohle-Pulver) zugeführt werden.

Die erfindungsgemäße Lösung bei der Aufbereitungsvorrichtung der eingangs erwähnten Art besteht darin, daß das Roh- oder Speisewasser eine als Wickelmodul ausgebildeten semipermeablen Membran (4) zugeführt wird, daß der Rohwasserabfluß sowie der Reinwasserabfluß an der Membran (4) in Zeitintervallen kurzfristig reduziert oder unterbrochen werden und daß vor einer Öffnung oder Erhöhung des Reinwasserabflusses eine Öffnung oder Erhöhung des Rohwasserabflusses an der Membran (4) in einer im Vergleich zu der Strömungsrichtung des vor der Reduzierung oder Unterbrechung an der Membran (4) vorbeiströmenden Rohwassers umgekehrten Fließrichtung erfolgt.

Die erfindungsgemäße Aufbereitungsvorrichtung weist zur Fließrichtungsumkehr des Rohwassers auf der Rohwasserseite eine Strömungs-Umkehreinrichtung auf, wobei die zum Rohwasser oder Speisewasserbereich der Aufbereitungsvorrichtung führenden Vorrichtungsöffnungen in Zeitintervallen wechselweise als Wassereinlaß oder Wasserauslaß dienen.

Um den Wasserdruck im Rohwasser- und im Reinwasserbereich beispielsweise auf denselben statischen Wasserdruck bringen und um anschließend, zur Schwall- oder Rückspülung der Membran, den statischen Wasserdruck im Rohwasserbereich kurzfristig absenken zu können, ist bei der erfindungsgemäßen Aufbereitungsvorrichtung der Reinwasserauslaß und die zum Rohwasserbereich führenden Vorrichtungsöffnungen jeweils mittels eines Sperrventils oder dergleichen Absperr- oder Regelorgans regulierbar. Mit Hilfe dieser Absperr- oder Regelorgane kann eine wechselweise Druckanpassung und Druckänderung des im Rohwasser- sowie im Reinwasserbereich der Aufbereitungsvorrichtung bestehenden Wasserdrucks erfolgen.

Dabei wird eine schwallartige Durchspülung der Membran durch das vorübergehend vom Reinwasserbereich in den Rohwasserbereich übertretende Wasser begünstigt, wenn die Sperrventile als Kugelhähne oder dergleichen schnellschließende Armaturen ausgebildet sind.

Um während der Spülphase der Aufbereitungsvorrichtung die Membran über einen gewissen Zeitraum gründlich durchspülen zu können, sieht eine Ausführungsform gemäß der Erfindung vor, daß zwischen dem Reinwasserbereich der Membran sowie dem Sperrventil des Reinwasserauslasses ein mit dem Reinwasserbereich der Aufbereitungsvorrichtung vorzugsweise rückschlagventilfrei verbundener Zwischenspeicher vorgesehen ist, so daß eine größere Menge des Reinwassers bei entsprechenden Druckverhältnissen durch die Membran in den Rohwasserbereich der Aufbereitungsvorrichtung übertreten kann.

Nach einem besonders einfach herzustellenden Vorschlag gemäß der Erfindung ist vorgesehen, daß zumindest eine Stirnseite des Wickelmoduls vorzugsweise als Anschwemm- und/oder Vorfilter dient.

Dabei kann es vorteilhaft sein, wenn die Aufbereitungsvorrichtung ein Vorrichtungsgehäuse zur Aufnahme eines Wickelmoduls hat, dessen Gehäuseinneres mit der zu- und abströmseitigen Rohwasser- oder Speisewasserleitung verbunden ist und wenn in dem zwischen dem Wickelmodul und dem Vorrichtungsgehäuse gebildeten Ringspalt eine Ringdichtung vorgesehen ist, die vorzugsweise an einem Endbereich des Wickelmoduls angeordnet ist und die den Ringspalt nur in einer Strömungsrichtung abdichtet sowie in dazu entgegengesetzter Strömungsrichtung durchlässig ist. Da bei einer solchen Ausführungsform auch der zwischen dem Außengehäuse und dem Wickelmodul gebildete Ringspalt zumindest in einer Fließrichtung entgegen der Sperrichtung der Ringdichtung des Rohwassers von diesem durchgespült wird, wird einer unerwünschten Schmutzbildung auch in diesem Bereich der Aufbereitungsvorrichtung entgegengewirkt.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform der Erfindung verwirklicht sein.

Es zeigt in zum Teil stark schematisierter Darstellung:
- **Fig. 1**: eine Aufbereitungsvorrichtung zur Reinwasserherstellung, die in einer Rohrleitung oder dergleichen Vorrichtungsgehäuse ein vom Rohwasser durchströmtes Wickelmodul aufweist,
- **Fig. 2**: eine zusätzlich vereinfachte Darstellung der Aufbereitungsvorrichtung aus Figur 1, wobei das Rohwasser die Aufbereitungsvorrichtung in einer gegenüber Figur 1 umgekehrten Fließrichtung durchströmt,
- **Fig. 3**: die Aufbereitungsvorrichtung aus Figur 1 und 2, wobei der Rohwasser- sowie der Reinwasserabfluß mittels jeweils eines Sperrventils abgesperrt sind,
- **Fig. 4**: die Aufbereitungsvorrichtung aus den Figuren 1 bis 3 in einer sogenannten Spülphase, in der nur der Reinwasserabfluß abgesperrt ist und dem auf der Reinwasserseite bestehenden statischen Wasserdruck ein demgegenüber geringerer statischer Wasserdruck auf der Rohwasserseite gegenübersteht, welcher zu einem Übertreten von Reinwasser durch die Membran auf die Rohwasserseite der Aufbereitungsvorrichtung führt, und
- **Fig. 5**: eine ebenfalls in ihrer Spülphase dargestellte Aufbereitungsvorrichtung, ähnlich der aus den Figuren 1 bis 4.

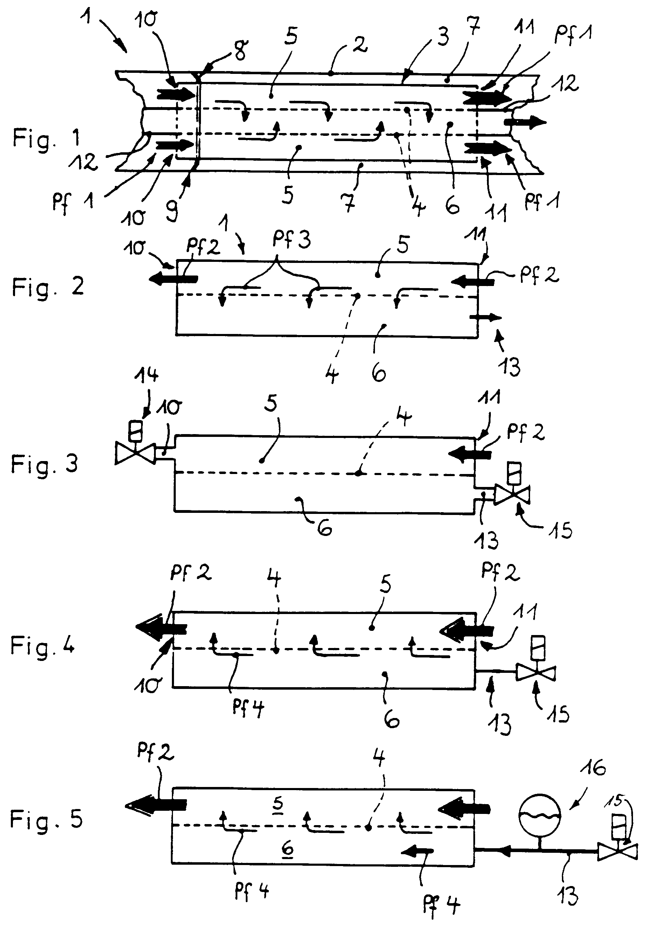

Figur 1 zeigt eine Aufbereitungsvorrichtung 1 zur Reinwasserherstellung, die in einem rohrförmigen Vorrichtungsgehäuse 2 ein Wickelmodul 3 enthält. Das Wickelmodul 3 hat zumindest eine semipermeable Membran 4, die hier rohrförmig und durch zwei gestrichelte Linien dargestellt ist. Die semipermeable Membran trennt einen Rohwasserbereich 5 von einem Reinwasserbereich 6 der Aufbereitungsvorrichtung 1.

Der zwischen der Außenseite des Wickelmoduls 3 und der Innenseite des Vorrichtungsgehäuses 2 gebildete Ringspalt 7 ist durch eine Ringdichtung 8 des Wickelmoduls 3 abgedichtet, deren äußere Dichtlippe 9 oder dergleichen äußeres freies Ende in Richtung zu dem benachbarten Stirnende des Wickelmoduls 3 weist. Durch diese Ausgestaltung der Ringdichtung 8 dichtet diese den Ringspalt 7 nur in der in Figur 1 dargestellten Strömungsrichtung des Rohwassers ab, während sie in der dazu entgegengesetzten Strömungsrichtung des Rohwassers zumindest teilweise durchlässig ist.

An den beiden Stirnenden des Wickelmoduls 3 ist jeweils zumindest eine, hier ringförmige Vorrichtungsöffnung 10, 11 vorgesehen, von denen die eine Vorrichtungsöffnung 10 in Figur 1 als Wassereinlaß zum Zuführen des Roh- oder Speisewassers dient und die andere Vorrichtungsöffnung 11 als Wasserauslaß für das an der Membran 4 vorbeiströmende Konzentrat vorgesehen ist. Der Reinwasserbereich 6 der Aufbereitungsvorrichtung 1 geht in ein Filtratsammelrohr 12 über, das auf beiden Seiten des Wickelmoduls 3 über das Modul übersteht und den Reinwasserauslaß 13 (vgl. Fig. 3 bis 5) bildet.

Wie bei herkömmlichen Wickelmodulen fließt in der in Figur 1 dargestellten Phase der Reinwasserherstellung das der Aufbereitungsvorrichtung 1 zugeführte Rohwasser über die Vorrichtungsöffnung 10 in Pfeilrichtung Pf1 in den Rohwasserbereich 5 ein. Da in diesem Rohwasserbereich 5 während der Phase der Reinwasserherstellung ein im Vergleich zum Reinwasserbereich 6 höherer Wasserdruck herrscht, passiert eine Teilmenge des an der Membran 4 vorbeiströmenden Roh- oder Speisewassers unter der treibenden Kraft einer Druckdifferenz die Membran 4 als Reinwasser, welches der Aufbereitungsvorrichtung 1 an dem in Fig. 1 linken und/oder rechten Ende des Filtratsammelrohres 12 entnommen werden kann.

In der in Figur 1 dargestellten Phase der Reinwasserherstellung sammeln sich die im Rohwasser enthaltenen Verschmutzungen vor allem an dem in Strömungsrichtung vorderen Endbereich des Wickelmoduls 3 an, während der in Strömungsrichtung hintere Endbereich weniger mit Schmutzpartikeln belastet wird. Um auch den jeweils weniger mit Schmutzpartikel belasteten Endbereich des Wickelmoduls 3 zu benützen und um größere Membranstandzeiten zu erzielen, wird bei der erfindungsgemäßen Aufbereitungsvorrichtung 1 in Zeitintervallen die Fließrichtung des an der Membran vorbeiströmenden Rohwassers gewechselt.

Figur 2 zeigt die Aufbereitungsvorrichtung 1 nach einer solchen Fließrichtungsumkehr in einer zusätzlich vereinfachten Darstellung. Aus Figur 2 wird deutlich, daß die Fließrichtung des an der Membran 4 vorbeiströmenden Rohwassers in Zeitintervallen umgekehrt oder gewechselt wird. Die in Fig. 1 als Wassereinlaß dienende Vorrichtungsöffnung 10 bildet in Figur 2 den Wasserauslaß, während die vor der Fließrichtungsumkehr als Wasserauslaß vorgesehene Vorrichtungsöffnung 11 in Fig. 2 als Wassereinlaß vorgesehen ist, welcher als der nun in Strömungsrichtung Pf2 vordere Endbereich des Wickelmoduls 3 stärker einer Verschmutzung ausgesetzt ist.

In Figur 3 ist erkennbar, daß der Reinwasserauslaß 13 und die zum Rohwasserbereich 5 führenden Vorrichtungsöffnungen 10, 11 jeweils mittels eines Sperrventils 14, 15 regulierbar sind. Von den den Vorrichtungsöffnungen 10, 11 zugeordneten Sperrventilen ist nur das Sperrventil 14 der Vorrichtungsöffnung 10 dargestellt. Durch Schließen der Sperrventile 14, 15 und Unterbrechen des Rohwasser- sowie des Reinwasserabflusses an der Membran 4 wird sowohl auf der Rohwasserseite 5 als auch auf der Reinwasserseite 6 der Aufbereitungsvorrichtung 1 annähernd derselbe Wasserdruck aufgebaut. Um im Anschluß daran den auf der Rohwasserseite 5 bestehenden statischen Wasserdruck relativ zu dem auf der Reinwasserseite 6 bestehenden statischen Wasserdruck in Zeitintervallen kurzzeitig schlagartig zu senken, wird - wie in Figur 4 dargestellt ist - vor einer Öffnung des Reinwasserabflusses zunächst der Rohwasserabfluß freigegeben, so daß dem auf der Reinwasserseite 6 bestehenden statischen Druck ein vergleichsweise niedrigerer statischer Druck und dementsprechend hoher dynamischer Wasserdruck auf der Rohwasserseite 5 gegenübersteht. In dieser, in Figur 4 dargestellten Spülphase besteht auf der Rohwasserseite 5 ein gegenüber der Reinwasserseite 6 der Aufbereitungsvorrichtung 1 geringerer statischer Wasserdruck, weshalb Reinwasser vom Reinwasserbereich 6 durch die Membran 4 auf die Rohwasserseite 5 übertritt und dabei rohwasserseitig an der Membran 4 anliegende Schmutzpartikel ausspült. Dabei kann der statische Druck des an der Membran 4 vorbeiströmenden Rohwassers durch eine Erhöhung der Fließgeschwindigkeit und damit des dynamischen Wasserdrucks des der Aufbereitungsvorrichtung 1 zugeführten Rohwassers in Pfeilrichtung Pf2 (vgl. Fig. 4) noch zusätzlich abgesenkt werden. In Figur 4 ist diese Erhöhung der Fließgeschwindigkeit des Rohwassers durch Doppelpfeile dargestellt.

Zur Erhöhung des Reinigungseffekts während der Spülphase ist es auch möglich, daß der Rohwasserabfluß bei geschlossenem Reinwasserabfluß mehrfach abwechselnd geöffnet und wieder verschlossen wird. Dadurch wird eine mehrfache impulsartige Druckänderung auf beiden Seiten der Membran sowie entsprechende schwallartige Rückströme des Reinwassers durch die Membran bewirkt.

Wird im Anschluß daran auch das Sperrventil 15 und somit der Reinwasserabfluß wieder geöffnet, so übersteigt der auf der Rohwasserseite 5 bestehende Wasserdruck den auf der Reinwasserseite 6 der Aufbereitungsvorrichtung 1 herrschenden Wasserdruck, so daß die Aufbereitungsvorrichtung 1 bis zur nächsten Fließrichtungsumkehr wieder in die Phase der Reinwasserherstellung übergeht. Nach einer gewissen Betriebsdauer kann erneut eine Fließrichtungsumkehr des Rohwassers gemäß den Figuren 1 bis 4 - jedoch mit umgekehrten Strömungsrichtungen des Rohwassers - vorgenommen werden.

Zweckmäßig ist es, wenn die für eine Fließrichtungsumkehr und/oder für eine Änderung des Wasserdrucks an der Membran 4 vorgesehenen Zeitintervalle und/oder die Höhe der Wasserdruckänderung an der Membran 4 in Abhängigkeit vom Verschmutzungsgrad des Roh- oder Speisewassers gewählt werden. Auch kann es vorteilhaft sein, wenn der Aufbereitungsvorrichtung 1, insbesondere in der in den Figuren 1 bis 3 dargestellten Spülphase, über eine der Vorrichtungsöffnungen 10, 11 vorübergehend Reinwasser oder ein geringer salzhaltiges Wasser als Rohwasser zugeführt wird, das in Pfeilrichtung Pf2 an der Membran vorbeiströmt.

Die in Figur 1 einerseits und den Figuren 2 bis 4 andererseits dargestellte Fließrichtungsumkehr sowie die Einleitung von Reinwasser über die Vorrichtungsöffnungen 10, 11 in den Rohwasserbereich 5 der Aufbereitungsvorrichtung 1 kann beispielsweise mittels entsprechender Mehrwege-Ventile erfolgen, die Teil einer Strömungs-Umkehreinrichtung sind.

Um in der Spülphase eine schlagartige statische Druckänderung auf der Rohwasserseite 5 im Vergleich zur Reinwasserseite 6 der Aufbereitungsvorrichtung 1 zu erreichen, ist es zweckmäßig, wenn die den Vorrichtungsöffnungen 10, 11 sowie dem Reinwasserauslaß 13 zugeordneten Sperrventile 14, 15 als Kugelhähne oder dergleichen schnellschließende Armaturen ausgebildet sind.

Um die Membran 4 in dieser Spülphase möglichst lang und wirkungsvoll reinigen zu können, weist die in Figur 5 dargestellte Aufbereitungsvorrichtung 1 zwischen dem Reinwasserbereich 6 der Aufbereitungsvorrichtung 1 und dem Sperrventil 15 des Reinwasserauslasses 13 einen mit deren Reinwasserbereich 6 rückschlagventilfrei verbundenen Zwischenspeicher 16 auf, der einen längeren reinigenden Rückfluß des Reinwassers durch die Poren der Membran 4 in den Rohwasserbereich 5 der Aufbereitungsvorrichtung 1 begünstigt und zur Erhöhung der Rückspülungsintensität ein windkesselartiges Druckpolster bildet. Dabei kann die in den Figuren 4 und 5 dargestellte Spülphase vor, während oder nach einer Fließrichtungsumkehr des an der Membran 4 vorbeiströmenden Rohwassers erfolgen.

Während die Rohwasserströme in den Figuren 1 bis 5 mit Pf1 und Pf2 bezeichnet sind, sind den Reinwasserströmen die Bezugszeichen Pf3 (Phase der Reinwasserherstellung) und Pf4 (Spülphase) zugeordnet.

Da das Wickelmodul 3 der erfindungsgemäßen Aufbereitungsvorrichtung 1 in Zeitintervallen durch eine Fließrichtungsumkehr des an der Membran 4 im Rohrwasserbereich 5 vorbeiströmenden Rohwassers und durch ein kurzfristiges schwallartiges Rückströmen des Reinwassers vom Reinwasserbereich 6 durch die Membran 4 in den Rohwasserbereich 5 gereinigt wird, kann auf ein siebartiges Vorfilter verzichtet werden, was eine nicht unwesentliche Platz - und Kostenersparnis bedeutet. Bei der Aufbereitungsvorrichtung 1 werden gröbere Partikel im Bereich der Vorrichtungsöffnungen 10, 11 aufgefangen, wobei die beiden Stirnseiten des Wickelmoduls als Anschwemm- und Vorfilter dienen. Um diese Reinigungswirkung der Vorrichtungsöffnungen 10, 11 zu verstärken, kann es zweckmäßig sein, wenn dem Rohwasser in Fließrichtung vor der Membran 4 zumindest während einer der in Figur 1 einerseits und den Figuren 2 bis 4 andererseits dargestellten Fließrichtungen chemische Anschwemmhilfen, Adsorptionsmittel und/oder Absorptionsmittel zugeführt werden. Auch ist es ein Vorteil der erfindungsgemäßen Aufbereitungsvorrichtung 1, daß der zwischen dem Wickelmodul 3 und dem Vorrichtungsgehäuse 2 gebildete Ringspalt durch das in Pfeilrichtung Pf2 (vgl. Fig. 2 bis 4) am Wickelmodul 3 vorbeiströmende Rohwasser gereinigt wird, welches in dieser Fließrichtung die Dichtlippe 9 der Ringdichtung 8 von der Innenseite des Vorrichtungsgehäuses 2 abhebt und an der Ringdichtung 8 vorbeifließen kann.

Die vorzugsweise in der Umkehrosmosetechnik betriebene Aufbereitungsvorrichtung 1 zeichnet sich durch lange Betriebs- und Membranstandzeiten aus.

## Patentansprüche

1. Verfahren zur Reinwasserherstellung, in dem Rohwasser oder dergleichen Speisewasser einer Aufbereitungsvorrichtung (1) mit zumindest einer semipermeablen Membran (4) zugeführt wird, wovon eine Teilmenge des Rohwassers unter der treibenden Kraft einer Druckdifferenz die Membran (4) als Reinwasser passiert und die Restmenge des an der Membran (4) vorbeiströmenden Rohwassers die Aufbereitungsvorrichtung (1) als Konzentrat verläßt, wobei mittels einer zeitweisen Reduzierung oder Unterbrechung des Reinwasserabflusses an der Membran (4) eine Erhöhung des statischen Wasserdrucks auf der Reinwasserseite (6) der Membran (4) bewirkt wird und nach einer statischen Druckerhöhung auf der Reinwasserseite (6), insbesondere nach einer Angleichung des statischen Wasserdrucks auf beiden Seiten der Membran (4), der auf der Rohwasserseite (5) der Aufbereitungsvorrichtung (1) bestehende statische Wasserdruck relativ zu dem auf der Reinwasserseite (6) bestehenden statischen Wasserdruck in Zeitintervallen kurzzeitig, vorzugsweise schlagartig, gesenkt wird, **dadurch gekennzeichnet**, daß das Roh- oder Speisewasser einer als Wickelmodul ausgebildeten semipermeablen Membran (4) zugeführt wird, daß der Rohwasserabfluß sowie der Reinwasserabfluß an der Membran (4) in Zeitintervallen kurzfristig reduziert oder unterbrochen werden und daß vor einer Öffnung oder Erhöhung des Reinwasserabflusses eine Öffnung oder Erhöhung des Rohwasserabflusses an der Membran (4) in einer im Vergleich zu der Strömungsrichtung des vor der Reduzierung oder Unterbrechung an der Membran (4) vorbeiströmenden Rohwassers umgekehrten Fließrichtung erfolgt.

2. Verfahren nach Anspruch 1, dadurch gekennzeichnet, daß die für eine Fließrichtungsumkehr und/oder für eine Anderung des Wasserdrucks an der Membran (4) vorgesehenen Zeitintervalle und/oder die Höhe der Wasserdruck-Änderung an der Membran (4) in Abhängigkeit vom Verschmutzungsgrad des Roh- oder Speisewassers gewählt werden.

3. Verfahren nach Anspruch 1 oder 2, dadurch gekennzeichnet, daß der Aufbereitungsvorrichtung (1) vorzugsweise zum zeitweisen Durchströmen in einer umgekehrten Fließrichtung, insbesondere während einer kurzfristigen Absenkung des statischen Wasserdruckes auf der Rohwasserseite (5) im Vergleich zu dem auf der Reinwasserseite (6) bestehenden statischen Wasserdruck, vorübergehend Reinwasser oder ein im Vergleich zum bisher verwendeten Rohwasser geringer salzhaltiges Wasser als Speisewasser zugeführt wird.

4. Verfahren nach einem der Ansprüche 1 bis 3, dadurch gekennzeichnet, daß dem Roh- oder Speisewasser in Fließrichtung vor der Membran (4) chemische Anschwemmhilfen, Adsorptionsmittel und/oder Absorptionsmittel zugeführt werden.

5. Verfahren nach einem der Ansprüche 1 bis 4, dadurch gekennzeichnet, daß das Verfahren zur Reinwasserherstellung ein Umkehrosmoseverfahren, insbesondere ein Verfahren zur Abwasserreinigung, ist.

6. Aufbereitungsvorrichtung zur Reinwasserherstellung, insbesondere zur Durchführung des Verfahrens nach einem der Ansprüche 1 bis 5, mit zumindest einer semipermeablen Membran (4), welche einen Rohwasser- oder Speisewasserbereich (5) der Aufbereitungsvorrichtung (1) von einem Reinwasserbereich (6) derart trennt, daß eine Teilmenge des an der Membran (4) vorbeiströmenden Roh- oder Speisewassers unter der treibenden Kraft einer Druckdifferenz die Membran (4) als Reinwasser passiert, wobei die Aufbereitungsvorrichtung (1) wenigstens zwei zu deren Rohwasser- oder Speisewasserbereich (5) führende Vorrichtungsöffnungen (10, 11) hat, von denen eine Vorrichtungsöffnung als Wassereinlaß zum Zuführen des Roh- oder Speisewassers zur Membran (4) dient und von denen die andere Vorrichtungsöffnung als Wasserauslaß für das Konzentrat vorgesehen ist, wobei die Aufbereitungsvorrichtung (1) in ihrem Reinwasserbereich (6) mindestens einen Reinwasserauslaß (13) aufweist, und wobei zur wechselweisen Druckanpassung und Druckänderung des im Rohwasser- sowie im Reinwasserbereich (5, 6) der Aufbereitungsvorrichtung (1) bestehenden Wasserdrucks Sperrventile (14, 15) oder dergleichen Absperr- oder Regelorgane vorgesehen sind, **dadurch gekennzeichnet**, daß die semipermeable Membran (4) der Aufbereitungsvorrichtung (1) als Wickelmodul ausgebildet ist, daß die Fließrichtung des auf der Rohwasser- oder Speisewasserseite (5) an der Membran (4) vorbeiströmenden Wassers mittels einer Strömungs-Umkehreinrichtung umkehrbar ist, daß die zum Rohwasser- oder Speisewasserbereich (5) der Aufbereitungsvorrichtung (1) führenden Vorrichtungsöffnungen (10, 11) in Zeitintervallen wechselweise als Wassereinlaß oder Wasserauslaß vorgesehen sind und daß der Reinwasserauslaß (13) und die zum Rohwasserbereich (13) führenden Vorrichtungsöffnungen (10, 11) jeweils mittels eines Absperr- oder Regelorgans regulierbar sind.

7. Aufbereitungsvorrichtung nach Anspruch 6, dadurch gekennzeichnet, daß die Sperrventile (14, 15) als Kugelhähne oder dergleichen schnellschließende Armaturen ausgebildet sind.

8. Aufbereitungsvorrichtung nach Anspruch 7 oder 8, dadurch gekennzeichnet, daß zumindest eine Stirnseite des Wickelmoduls vorzugsweise als Anschwemm- und/oder Vorfilter dient.

9. Aufbereitungsvorrichtung nach einem der Ansprüche 6 bis 8, dadurch gekennzeichnet, daß die Aufbereitungsvorrichtung (1) ein Vorrichtungsgehäuse (2) zur Aufnahme eines Wickelmoduls (3) hat, dessen Gehäuseinneres mit der zu- und abströmseitigen Rohwasser- oder Speisewasserleitung verbunden ist und daß in dem zwischen dem Wickelmodul (3) und dem Vorrichtungsgehäuse (2) gebildeten Ringspalt (7) eine Ringdichtung (8) vorgesehen ist, die vorzugsweise an einem Endbereich des Wickelmoduls (3) angeordnet ist und die den Ringspalt (7) nur in einer Strömungsrichtung (Pf1) abdichtet sowie in dazu entgegengesetzter Strömungsrichtung (Pf2) durchlässig ist.

## Claims

1. A process of producing pure water, wherein raw water or similar feed water is supplied to a conditioning device (1) with at least one semipermeable membrane (4), part of the raw water going through the membrane (4) as pure water under the driving force of a pressure difference, and the remaining raw water that flows by the membrane (4) leaving the conditioning device (1) as a concentrate, wherein an increase in the static water pressure on the pure water side (6) of the membrane (4) is brought about by means of an intermittent reduction or interruption of the outflow of pure water at the membrane (4) and after a static pressure increase on the pure water side (6), particularly after a balancing of the static water pressure on both sides of the membrane (4), the static water pressure prevailing on the raw water side (5) of the conditioning device (1) is periodically lowered momentarily, preferably abruptly, relative to the static water pressure prevailing on the pure water side (6), **characterized in that** the raw water or feed water is supplied to a semipermeable membrane (4) in the form of a wound module, that the outflow of raw water and the outflow of pure water at the membrane (4) is periodically reduced or interrupted for a short time, and that before the outflow of pure water is opened or increased the outflow of raw water at the membrane (4) is opened or increased in a reversed direction of flow compared to the direction of flow of the raw water flowing by the membrane (4) prior to the reduction or interruption.

2. A process as claimed in claim 1, characterized in that the time intervals provided for reversing the direction of flow and/or for altering the water pressure at the membrane (4) are selected in dependence on the degree of pollution of the raw water or feed water.

3. A process as claimed in claim 1 or claim 2, characterized in that pure water or a less saliferous water compared to the formerly used raw water is temporarily supplied as feed water to the conditioning device (1), preferably for intermittent passage in a reverse direction of flow, particularly during a short-term lowering of the static water pressure on the raw water side (5) compared to the static water pressure prevailing on the pure water side (6).

4. A process as claimed in any one of claims 1 to 3, characterized in that chemical precoating agents, adsorbing agents and/or absorbing agents are supplied before the membrane (4) in the direction of flow.

5. A process as claimed in any one of claims 1 to 4, characterized in that the process for producing pure water is a reverse osmosis process, particularly a process for purifying waste water.

6. A conditioning device for producing pure water, particularly for carrying out the process as claimed in any one of claims 1 to 5, including at least one semipermeable membrane (4) separating a raw water zone or feed water zone (5) of the conditioning device (1) from a pure water zone (6) in such a way that part of the raw water or feed water flowing by the membrane (4) goes through the membrane (4) as pure water under the driving force of a pressure difference, wherein the conditioning device (1) has at least two openings (10, 11) leading to the raw or supply water zone (5), one of which openings serves as a water inlet for supplying the raw or feed water to the membrane (4) and the other is designed as a water outlet for the concentrate, whereby the conditioning device (1) has at least one pure water outlet (13) in its pure water zone (6), and whereby stop valves (14, 15) or similar shutting-off or control elements are provided for the alternate pressure adjustment and change of the water pressure prevailing in the raw water zone and in the pure water zone (5, 6) of the conditioning device (1), **characterized in that** the semipermeable membrane (4) of the conditioning device (1) takes the form of a wound module, that the direction of flow of the water flowing by the membrane (4) on the raw water or feed water side (5) is reversible by means of a flow reversal means, that the openings (10, 11) leading to the raw water or feed water zone (5) of the conditioning device (1) are provided as water inlet or water outlet alternately and periodically and that the pure water outlet (13) and the openings (10, 11) leading to the raw water zone (5) are in each case regulable by means of a shutting-off or control element.

7. A conditioning device as claimed in claim 6, characterized in that the stop valves (14, 15) take the form of ball valves or similar quick-action valves.

8. A conditioning device as claimed in claim 6 or claim 7, characterized in that at least one front face of the wound module preferably serves as a precoat filter and/or prefilter.

9. A conditioning device as claimed in any one of claims 6 to 8, characterized in that the conditioning device (1) has a housing (2) to accommodate a wound module (3), the housing interior thereof being connected to the raw water line or feed water line on the inflow and outflow side, and that provided in the annular gap (7) formed between the wound module (3) and the housing (2) there is a ring seal (8) which is preferably arranged at an end zone of the wound module (3) and seals the annular gap (7) only in one direction of flow (Pf1) and is permeable in the opposite direction of flow (Pf2).

## Revendications

1. Procédé pour la production d'eau pure, dans lequel de l'eau brute ou une eau d'alimentation similaire est amenée à un dispositif de traitement (1) qui comprend au moins une membrane semi-perméable (4), et depuis lequel une partie de l'eau brute passe à travers la membrane (4) sous la forme d'eau pure, sous l'effet de la force motrice d'une différence de pression, et le reste de l'eau brute en écoulement sur la membrane (4) quitte le dispositif de traitement (1) sous la forme d'un concentré, cependant que l'on produit une augmentation de la pression statique de l'eau du côté de l'eau pure (6) de la membrane (4) au moyen d'une réduction ou d'une interruption temporaire de l'écoulement de l'eau pure sur la membrane (4), et qu'après une augmentation statique de la pression du côté de l'eau pure (6), et en particulier après une égalisation de la pression statique de l'eau des deux côtés de la membrane (4), on diminue périodiquement pendant une courte durée, et de préférence par à-coups, la pression statique de l'eau qui règne du côté de l'eau brute (5) du dispositif de traitement (1) par rapport à la pression statique de l'eau qui règne du côté de l'eau pure (6), caractérisé par le fait que l'on amène l'eau brute ou d'alimentation à une membrane semi-perméable (4) qui est réalisée sous la forme d'un module enroulé, par le fait que l'on réduit ou interrompt périodiquement pendant une courte durée l'écoulement de l'eau brute et l'écoulement de l'eau pure sur la membrane (4), et par le fait qu'avant une mise en route ou une augmentation de l'écoulement de l'eau pure, il se produit une mise en route ou une augmentation de l'écoulement de l'eau brute sur la membrane (4) dans une direction inverse de la direction de l'écoulement de l'eau brute qui s'écoule sur la membrane (4) avant la réduction ou l'interruption.

2. Procédé selon la revendication 1, caractérisé par le fait qu'en fonction du degré de pollution de l'eau brute ou d'alimentation, on choisit les intervalles de temps qui sont prévus pour une inversion de la direction de l'écoulement et/ou pour une modification de la pression de l'eau sur la membrane (4), et/ou le niveau de la modification de la pression de l'eau sur la membrane (4).

3. Procédé selon la revendication 1 ou 2, caractérisé par le fait que, pour servir d'eau d'alimentation, on amène de préférence au dispositif de traitement (1), d'une manière prépondérante, de l'eau pure ou une eau qui contient moins de sel que l'eau brute utilisée jusqu'alors en vue de l'écoulement qui a lieu temporairement dans une direction inverse, et en particulier pendant une diminution de courte durée de la pression statique de l'eau du côté de l'eau brute (5) par rapport à la pression statique de l'eau qui règne du côté de l'eau pure (6).

4. Procédé selon l'une des revendications 1 à 3, caractérisé par le fait qu'en amont de la membrane (4) dans la direction de l'écoulement, on amène à l'eau brute ou d'alimentation des moyens chimiques de sédimentation, des moyens d'adsorption et/ou des moyens d'absorption.

5. Procédé selon l'une des revendications 1 à 4, caractérisé par le fait que le procédé de production d'eau pure est un procédé d'osmose inverse, et en particulier un procédé pour la purification des eaux usées.

6. Dispositif de traitement pour la production d'eau pure, en particulier pour la mise en oeuvre du procédé selon l'une des revendications 1 à 5, comprenant au moins une membrane semi-perméable (4) qui sépare une zone de l'eau brute ou d'alimentation (5) du dispositif de traitement (1) d'une zone de l'eau pure (6), et ce, d'une manière telle qu'une partie de l'eau brute ou d'alimentation qui s'écoule sur la membrane (4) passe à travers la membrane (4) sous la forme d'eau pure, sous l'effet de la force motrice d'une différence de pression, cependant que le dispositif de traitement (1) comporte au moins deux ouvertures (10, 11) du dispositif qui conduisent à sa zone de l'eau brute ou d'alimentation (5) et parmi lesquelles une ouverture du dispositif sert d'entrée d'eau pour amener à la membrane (4) l'eau brute ou d'alimentation et parmi lesquelles l'autre ouverture du dispositif est prévue pour servir de sortie au concentré, que le dispositif de traitement (1) comporte au moins une sortie d'eau pure (13) dans sa zone de l'eau pure (6), et qu'il est prévu des vannes d'arrêt (14, 15) ou des organes similaires d'arrêt ou de régulation en vue de l'adaptation et de la modification alternatives de la pression de l'eau qui règne dans les zones (5, 6) de l'eau brute et de l'eau pure du dispositif de traitement (1), caractérisé par le fait que la membrane semi-perméable (4) du dispositif de traitement (1) est réalisée sous la forme d'un module enroulé, par le fait que la direction de l'écoulement de l'eau qui s'écoule sur la membrane (4) du côté de l'eau brute ou d'alimentation (5) peut être inversée au moyen d'un dispositif d'inversion de l'écoulement, par le fait que les ouvertures (10, 11) du dispositif qui conduisent à la zone de l'eau brute ou d'alimentation (5) du dispositif de traitement (1) sont prévues pour servir alternativement par périodes d'entrée d'eau ou de sortie d'eau, et par le fait que la sortie de l'eau pure (13) et les ouvertures (10, 11) du dispositif qui conduisent à la zone de l'eau brute (5) peuvent être régulées chacune au moyen d'un organe d'arrêt ou de régulation.

7. Dispositif de traitement selon la revendication 6, caractérisé par le fait que les vannes d'arrêt (14, 15) sont réalisées sous la forme de robinets à boisseau sphérique ou de robinets similaires qui se ferment rapidement.

8. Dispositif de traitement selon la revendication 6 ou 7, caractérisé par le fait qu'au moins un côté frontal du module enroulé sert de préférence de filtre à couches et/ou de filtre préparatoire.

9. Dispositif de traitement selon l'une des revendications 6 à 8, caractérisé par le fait que le dispositif de traitement (1) comporte une enveloppe (2) du dispositif qui est destinée à recevoir un module enroulé (3) et dont l'intérieur est relié à la conduite d'eau brute ou d'alimentation située du côté de l'entrée et de la sortie, et par le fait qu'il est prévu, dans l'intervalle annulaire (7) qui est formé entre le module enroulé (3) et l'enveloppe (2) du dispositif, un joint d'étanchéité annulaire (8) qui est disposé de préférence dans l'une des zones d'extrémité du module enroulé (3), qui ne rend étanche l'intervalle annulaire (7) que dans une direction d'écoulement (Pf1), et qui est perméable dans la direction d'écoulement opposée (Pf2).
